# EUROPÄISCHE PATENTSCHRIFT

(11) **EP 4 268 303 B1**
(45) Veröffentlichungstag und Bekanntmachung des Hinweises auf die Patenterteilung: **13.05.2026**
(21) Anmeldenummer: 21806180.2
(22) Anmeldetag: 03.11.2021
(51) Int. Cl.: H01M 8/04089, H01M 8/0444, H01M 8/04746, H01M 8/2475

(54) **BRENNSTOFFZELLENSYSTEM UND VERFAHREN ZU DESSEN BETRIEB**
FUEL CELL SYSTEM AND METHOD FOR OPERATING SAME
SYSTÈME DE PILE À COMBUSTIBLE ET SON PROCÉDÉ DE FONCTIONNEMENT

(30) Priorität: 22.12.2020 DE 102020216490
(43) Veröffentlichungstag der Anmeldung: 01.11.2023
(73) Patentinhaber: Stellantis Auto SAS, 78300 Poissy (FR)
(72) Erfinder: WEXEL, Dirk, 65428 Rüsselsheim am Main (DE); REUTER, Daniel, 65428 Rüsselsheim am Main (DE); HELLER, Florian, 65428 Rüsselsheim am Main (DE)
(74) Vertreter: PSIP
(86) Internationale Anmeldenummer: PCT/EP2021/080493
(87) Internationale Veröffentlichungsnummer: WO 2022/135776

(56) Entgegenhaltungen:
- DE-A1- 102017 204 110
- DE-A1- 102018 200 681
- JP-A- 2013 247 051
- US-A1- 2018 166 731

## Beschreibung

### Technisches Gebiet

WO 2015/180746 A1 offenbart ein Brennstoffzellensystem mit wenigstens einem Brennstoffzellenstapel, welcher in einem Gehäuse angeordnet ist, wobei das Gehäuse wenigstens eine Belüftungsverbindung zur Umgebung oder einem anderen Volumen aufweist. Die Erfindung ist dadurch gekennzeichnet, dass die Belüftungsverbindung eine Ventileinrichtung aufweist.

Aus dem Strand der Technik sind ferner die Druckschriften DE 10 2018 200681 A1, DE 10 2017 204110 A1, JP 2013 247051 A1 und US 2018 166731 A1 bekannt.

### Beschreibung

Gemäß der vorliegenden Offenbarung soll ein Brennstoffzellensystem und ein Verfahren zu dessen Betrieb angegeben werden, mit dem es ermöglicht wird, den Brennstoffgehalt in der Nähe einer potentiellen Zündquelle unterhalb eines kritischen Schwellwertes zu halten, sodass ungewollte Entzündungsvorgänge unterbunden werden.

Ein Aspekt der Offenbarung betrifft ein Verfahren zum Betrieb eines Brennstoffzellensystems. Weitere Aspekte betreffen ein Brennstoffzellensystem, eine Steuereinheit zum Steuern eines Brennstoffzellensystems sowie ein Computerprogrammprodukt, ein Computerprogramm und eine Signalfolge zur Durchführung des Verfahrens zum Betrieb eines Brennstoffzellensystems. Die Unteransprüche bilden vorteilhafte Weiterbildungen der Offenbarung aus. Die Unteransprüche können in technologisch sinnvoller Weise miteinander kombiniert werden. Die Beschreibung, insbesondere im Zusammenhang mit den Figuren, charakterisiert und spezifiziert die Offenbarung zusätzlich.

Vorgesehen ist demgemäß ein Verfahren zum Betrieb eines Brennstoffzellensystems mit einem zwei Öffnungen aufweisenden Gehäuse, und einer in dem Gehäuse angeordneten Brennstoffzelle aufweisend die folgenden Teilschritte: (i.) Bereitstellen von Luft, sowie Teilen der Luft in einen ersten Luftteilstrom und einen zweiten Luftteilstrom; und (ii.) Leiten des zweiten Luftteilstroms über eine erste Öffnung in das Gehäuse, Leiten des zweiten Luftteilstroms entlang der Brennstoffzelle, und Ableiten des zweiten Luftteilstroms über die zweite Öffnung aus dem Gehäuse. In dem Gehäuse kann sich Brennstoff anreichern, indem der Brennstoff durch Diffusion beziehungsweise Permeation über Dichtungen der Brennstoffzelle aus der Brennstoffzelle in das Gehäuse gelangt.

Demnach kann potentiell aus der Brennstoffzelle austretender, entzündlicher Brennstoff aus der Nähe einer potentiellen Zündquelle entfernt werden, wodurch die Betriebssicherheit des Brennstoffzellensystems gesteigert werden kann.

In einer Ausgestaltung weist das Verfahren ferner die folgenden Teilschritte auf: (iii.) Bereitstellen von Brennstoff; und (iv.) Leiten des ersten Luftteilstroms und des Brennstoffes in die Brennstoffzelle, Umwandlung von bei der in der Brennstoffzelle stattfindenden chemischen Reaktion von Brennstoff und in dem ersten Luftteilstrom enthaltenem Sauerstoff freigesetzter chemischer Energie zu elektrischer Energie.

Demnach ist die Brennstoffzelle auch dazu geeignet, elektrische Energie bereitzustellen, wodurch sich unterschiedlichste Verwendungsmöglichkeiten ergeben, zum Beispiel die Verwendung in einem Kraftfahrzeug zur Bereitstellung von unmittelbar nutzbarer und einfach speicherbarer Antriebsenergie.

In einer Ausgestaltung werden die Teilschritte ii und iv gleichzeitig durchgeführt.

Demnach kann auch während der Stromerzeugung mittels der Brennstoffzelle das erfindungsgemäße Verfahren durchgeführt werden. Dadurch kann die Effizienz des Verfahrens gesteigert werden.

In einer Ausgestaltung wird ferner ein Luftfilter bereitgestellt und während des Teilschrittes ii mittels des Luftfilters der aus dem Gehäuse abgeleitete zweite Luftteilstrom gefiltert. Darüber hinaus kann mittels des Luftfilters der mit dem Ableiten des zweiten Luftstroms aus dem Gehäuse resultierende Luftstrom und damit der gesamte Luftstrom, der in das, durch das und aus dem Gehäuse geleitet wird, gedrosselt beziehungsweise eingestellt werden.

Demnach können unter anderem umweltkritische Elemente an dem Eintritt in die Umgebung beziehungsweise in die Umwelt gehindert werden. Dadurch kann die Sicherheit des Verfahrens gesteigert werden.

In einer Ausgestaltung werden ferner ein Brennstoffsensor bereitgestellt und mittels des Brennstoffsensors der Gehalt an Brennstoff in dem im Gehäuse vorhandenen zweiten Luftteilstrom gemessen.

Demnach werden Informationen bereitgestellt, die als Grundlage dafür dienen können, Teilschritt ii. gezielt zu steuern. Beispielsweise wird es ermöglicht, nur dann Luft in das Gehäuse einzuleiten und aus dem Gehäuse abzuleiten, wenn der Gehalt an Brennstoff einen kritischen Wert überschreitet. Außerdem wird es ermöglicht, dass mittels des Luftfilters der Luftstrom, der in das, durch das und aus dem Gehäuse geleitet wird, derart eingestellt wird, dass der Gehalt an Brennstoff im Gehäuse konstant unterhalb eines Grenzwertes gehalten wird. Dadurch können Betriebskosten reduziert werden. Erfindungsgemäß wird ein zweiter Brennstoffsensor bereitgestellt und mittels des zweiten Brennstoffsensors der Gehalt an Brennstoff in der außerhalb des Gehäuses in der Umgebung der zweiten Öffnung vorhandenen Luft gemessen.

Demnach werden weitere Informationen bereitgestellt, die als Grundlage für die Sicherheit des Brennstoffzellensystems verwendet werden können. Überschreitet der Gehalt an Brennstoff außerhalb des Gehäuses einen kritischen Grenzwert, kann zum einen vermehrt Luft in das Gehäuse eingeleitet und aus dem Gehäuse abgeleitet werden. Zum anderen kann, wenn die vermehrte Luftzirkulation den Gehalt an Brennstoff außerhalb des Gehäuses nicht im gewünschten Umfang absinken lässt, auch der Betrieb der Brennstoffzelle unterbrochen werden. Dadurch kann die Sicherheit des Verfahrens gesteigert werden.

In einer Ausgestaltung wird während des Teilschrittes ii aus der Brennstoffzelle austretender Brennstoff in dem zweiten Luftteilstrom angereichert und der zweite Luftteilstrom aus dem Gehäuse als Luft-Brennstoff-Gemisch abgeleitet.

Demnach wird es ermöglicht, den potentiell entzündlichen Brennstoff aus dem Gehäuse abzuleiten. Dadurch kann die Sicherheit des Verfahrens erhöht werden.

Ein weiterer Aspekt betrifft ein Brennstoffzellensystem aufweisend die folgenden Komponenten: ein Gehäuse aufweisend zwei Öffnungen, eine in dem Gehäuse angeordnete Brennstoffzelle und ein Belüftungssystem, mit dem Luft leitbar ist, wobei Luft über die erste Öffnung in das Gehäuse einleitbar ist und im Gehäuse vorhandene Luft über die zweite Öffnung aus dem Gehäuse ableitbar ist. Die Brennstoffzelle kann beispielsweise eine Anode und eine Kathode aufweisen. Die Anode und/oder Kathode kann einen Katalysator aufweisen, um die chemische Reaktion zwischen Brennstoff und im ersten Luftteilstrom enthaltenen Sauerstoff zu begünstigen. Die Brennstoffzelle kann zusätzlich ein Elektrolyt aufweisen, der zwischen Anode und Kathode angeordnet sein kann. Der Elektrolyt kann flüssig sein, beispielsweise Kalilauge oder Phosphorsäure. Der Elektrolyt kann aber auch ein Feststoff sein, beispielsweise eine Polymermembran oder ein Festoxid. Die Brennstoffzelle ist insbesondere dafür geeignet, mit wasserstoffhaltigem Brennstoff betrieben zu werden, beispielsweise mit molekularem Wasserstoff, Methanol, Methan oder Kohlegas.

Ferner kann das Brennstoffzellensystem eine Energieversorgung aufweisen, die insbesondere für das Belüftungssystem verwendet werden kann. Die Energieversorgung kann zusätzlich ein Kühlsystem aufweisen, um eine konstante Betriebstemperatur zu ermöglichen und damit letztlich die Lebensdauer der Energieversorgung zu erhöhen.

Demnach wird ein Brennstoffzellensystem bereitgestellt, mit dem die Durchführung des erfindungsgemäßen Verfahrens ermöglicht wird.

In einer Ausgestaltung weist das Brennstoffzellensystem ferner zumindest einen Brennstoffsensor auf und ist der zumindest eine Brennstoffsensor im Gehäuse angeordnet. Demnach wird die Durchführung der oben beschriebenen, diesbezüglichen Ausgestaltung des Verfahrens ermöglicht. Dadurch können Betriebskosten reduziert werden.

In einer Ausgestaltung weist das Brennstoffzellensystem ferner einen Luftfilter auf und ist der Luftfilter an der Außenseite des Gehäuses und die zweite Öffnung bedeckend angeordnet.

Demnach wird die Durchführung der oben beschriebenen, diesbezüglichen Ausgestaltung des Verfahrens ermöglicht. Dadurch kann die Sicherheit des Verfahrens gesteigert werden.

Erfindungsgemäß weist das Brennstoffzellensystem einen zweiten Brennstoffsensor auf und ist außerhalb des Gehäuses in der Umgebung der zweiten Öffnung angeordnet.

Demnach wird die Durchführung der oben beschriebenen, diesbezüglichen Ausgestaltung des Verfahrens ermöglicht. Dadurch kann die Sicherheit des Verfahrens gesteigert werden.

In einer Ausgestaltung weist das Brennstoffzellensystem ferner eine weitere in dem Gehäuse angeordnete Brennstoffzelle auf und sind die Brennstoffzellen als Brennstoffzellenstapel angeordnet.

Demnach sind mit dem Brennstoffzellensystem höhere Spannungen erzeugbar. Dadurch können Einrichtungen mit höherem Leistungsbedarf betrieben werden, insbesondere Kraftfahrzeuge.

In einer Ausgestaltung weist das Belüftungssystem ferner einen Kompressor auf. Demnach wird es ermöglicht, die Luft beziehungsweise die Luftteilströme mit erhöhter Dichte, also eine erhöhte Luftmasse beziehungsweise Luftteilstrommassen zu leiten. Dadurch kann die Effizienz des Verfahrens erhöht werden.

In einer Ausgestaltung weist das Brennstoffzellensystem ferner einen Ladeluftkühler auf.

Demnach wird es ermöglicht, die Luft beziehungsweise die Luftteilströme insbesondere dann, wenn diese davor verdichtet wurden - wobei deren Temperatur steigt - abzukühlen. Auf diese Weise kann die Brennstoffzelle konvektiv gekühlt werden, indem der zweite Luftteilstrom entlang der Brennstoffzelle geleitet wird. Dadurch kann die Brennstoffzelle im optimalen Betriebstemperaturbereich gehalten werden, wodurch die Effizienz des Verfahrens gesteigert werden kann.

In einer Ausgestaltung weist das Brennstoffzellensystem ferner einen zweiten Luftfilter auf und ist der zweite Luftfilter vor der ersten Öffnung und außerhalb des Gehäuses angeordnet. Bevorzugt sind Luftfilter, Kompressor und Ladeluftkühler derart angeordnet, dass die Luft zuerst mittels des Luftfilters gefiltert wird, dann mittels des Kompressors komprimiert wird und letztlich mittels des Ladeluftkühlers abgekühlt wird.

Demnach wird es zum einen ermöglicht, das Gehäuse rein zu halten, wodurch Reinigungszeiten minimiert werden und letztlich die Auslastung des Brennstoffzellensystems gesteigert werden kann. Zum anderen wird es ermöglicht, dem Kompressor und/oder Ladeluftkühler saubere Luft zuzuführen, wodurch deren Lebensdauer und deren Wirkungsgrad gesteigert werden können. Dadurch können Betriebskosten minimiert werden.

Vorgesehen zur Durchführung des Verfahrens ist eine Steuereinheit zum Steuern eines Brennstoffzellensystems, wobei die Steuereinheit signaltechnisch derart mit dem Brennstoffzellensystem verbindbar ist, dass mit der Steuereinheit das Belüftungssystem gesteuert werden kann, und wobei die Steuereinheit Programmmodule aufweist, in denen hinterlegt ist, wie Luft mittels des Belüftungssystems in das Gehäuse einleitbar und aus dem Gehäuse ableitbar ist. Die Steuereinheit kann Teil einer übergeordneten Steuereinheit, beispielsweise der Steuereinheit eines Kraftfahrzeugs sein.

Demnach kann eine automatisierte und gegebenenfalls zentrale Steuerung erfolgen, wodurch die Fehlerquote gesenkt und Betriebskosten verringert werden können.

Eine Ausführungsform betrifft ein Computerprogrammprodukt mit Programmcode-Mitteln, die auf einem computerlesbaren Datenträger gespeichert sind, um das vorstehend beschriebene Verfahren durchzuführen, wenn das Computerprogrammprodukt auf einem Computer, insbesondere in einer Steuerelektronik eines Steuersystems ausgeführt wird. Das Steuersystem kann wie vorstehend beschrieben aus-, und weitergebildet sein.

Eine Ausführungsform betrifft ein Computerprogramm mit kodierten Anweisungen zur Durchführung des vorstehend beschriebenen Verfahrens, wenn das Computerprogramm auf einem Computer, insbesondere einer Steuerelektronik eines Steuersystems ausgeführt wird. Das Steuersystem kann wie vorstehend beschrieben aus- und weitergebildet sein. Das Computerprogramm kann insbesondere auf dem vorstehend beschriebenen Computerprogrammprodukt, beispielsweise eine Diskette, CD-ROM, DVD, Speicher, eine an das Internet angeschlossene Prozessoreinheit, gespeichert sein. Das Computerprogramm kann insbesondere als eine kompilierte oder noch nicht kompilierte Datenfolge ausgestaltet sein, die vorzugsweise auf einer höheren, insbesondere objektbasierten Computersprache basiert.

Eine Ausführungsform betrifft eine Signalfolge mit computerlesbaren Anweisungen zur Durchführung des vorstehend beschriebenen Verfahrens, wenn die Signalfolge von einem Computer, insbesondere einer Steuerelektronik eines Steuersystems verarbeitet wird. Das Steuersystem kann wie vorstehend beschrieben aus- und weitergebildet sein. Die Signalfolge kann insbesondere mit Hilfe des vorstehend beschriebenen Computerprogramms und/oder mit Hilfe des vorstehend beschriebenen Computerprogrammprodukts erzeugt werden. Die Signalfolge kann als elektrische Impulse und/oder elektromagnetische Welle und/oder optische Impulse drahtlos oder drahtgebunden bereitgestellt werden.

Ein Mittel zur Realisierung der Verfahrensschritte im Sinne der vorliegenden Offenbarung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Steuereinheit mit Mikroprozessoren (CPU) und/oder ein oder mehrere Programme oder Programmmodule aufweisen. Die CPU kann dazu ausgebildet sein, Befehle, die als Programm implementiert sind, abzuarbeiten, Eingangssignale von einem Datenbus zu erfassen und/oder Ausgangssignale an einen Datenbus abzugeben. Das Programm kann auf einem Speichersystem abgelegt sein. Das Speichersystem kann ein oder mehrere, insbesondere verschiedene, Speichermedien, insbesondere optische, magnetische, Festkörper und/oder andere nicht-flüchtige Medien aufweisen. Das Programm kann derart beschaffen sein, dass es die hier beschriebenen Verfahren verkörpert bzw. auszuführen imstande ist, so dass die CPU die Schritte solcher Verfahren ausführen kann. In einer Ausführung sind ein oder mehrere, insbesondere alle Schritte des Verfahrens vollständig oder teilweise automatisiert durchführbar, insbesondere durch die Steuerung bzw. ihre Mittel.

### Kurzbeschreibung der Figuren

Die hierin beschriebenen Zeichnungen dienen nur zu Veranschaulichungszwecken und sollen den Umfang der vorliegenden Offenbarung in keiner Weise einschränken. Es zeigen:
Fig. 1: ein Verfahren zum Betrieb eines Brennstoffzellensystems 100 (nicht Bestandteil der Erfindung);
Fig. 2: ein Brennstoffzellensystem 200; und
Fig. 3: einen Brennstoffzellenstapel 300;

Die folgende Beschreibung ist dem Wesen nach lediglich veranschaulichend. Der Klarheit halber sind in den Zeichnungen zur Bezeichnung ähnlicher Elemente dieselben Bezugszeichen verwendet. Es ist festzustellen, dass einige Schritte innerhalb eines Verfahrens in anderer Reihenfolge ausgeführt werden können, ohne die Prinzipien der vorliegenden Offenbarung zu ändern.

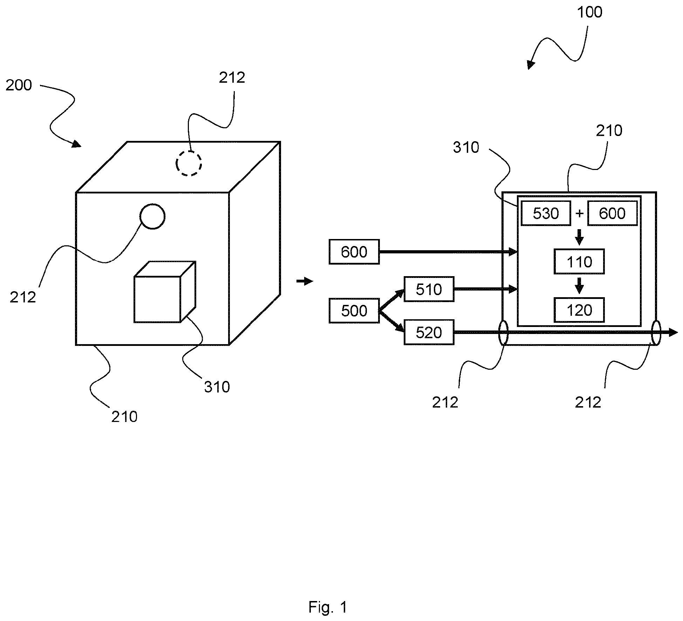

Figur 1 zeigt eine Ausgestaltung eines Verfahrens zum Betrieb eines Brennstoffzellensystems 100, welches den Stand der Technik darstellt und nicht Bestandteil der Erfindung ist, mit einem Öffnungen 212 aufweisenden Gehäuse 210, und einer in dem Gehäuse 210 angeordneten Brennstoffzelle 310. Zuerst wird Luft 500 bereitgestellt und in einen ersten Luftteilstrom 510 und einen zweiten Luftteilstrom 520 geteilt. Parallel dazu wird Brennstoff 600 bereitgestellt.

Danach wird der zweite Luftteilstrom 520 über eine erste Öffnung 212 in das Gehäuse 210 geleitet, entlang der Brennstoffzelle 310 geleitet und über die zweite Öffnung 212 aus dem Gehäuse 210 abgeleitet. Parallel dazu werden der erste Luftteilstrom 510 und der Brennstoff 600 in die Brennstoffzelle 310 geleitet und die bei der in der Brennstoffzelle 310 stattfindenden chemischen Reaktion von Brennstoff 600 und in dem ersten Luftteilstrom 510 enthaltenem Sauerstoff 530 freigesetzte chemische Energie 110 zu elektrischer Energie 120 umgewandelt.

Der zweite Luftteilstrom 520 kann entlang einer Seite der Brennstoffzelle 310, aber auch entlang mehrerer Seiten der Brennstoffzelle 310 geleitet werden. Die Luft 500 kann aus der Umgebung bereitgestellt werden. Der Brennstoff 600 kann in einem Brennstofftank, beispielsweise einem Brennstoffdrucktank bereitgestellt werden. Zur Erhöhung der Effizienz des Verfahrens kann die Luft 500 auch derart geteilt werden, dass ein dritter, vierter oder beliebig viele weitere Luftteilströme bereitgestellt werden, die über weitere Öffnungen 212 in das Gehäuse 210 eingeleitet werden können.

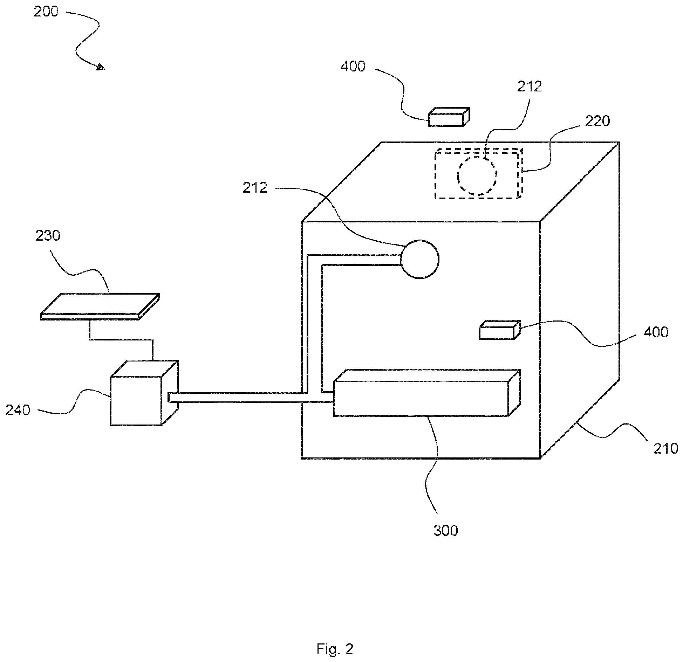

Figur 2 zeigt eine Ausgestaltung eines Brennstoffzellensystems 200 aufweisend ein Gehäuse 210 aufweisend zwei Öffnungen 212, ein in dem Gehäuse 210 angeordneter Brennstoffzellenstapel 300 und ein Belüftungssystem 240, mit dem Luft 500 leitbar ist, wobei Luft 500 über die erste Öffnung 212 in das Gehäuse 210 einleitbar ist und im Gehäuse 210 vorhandene Luft 500 über die zweite Öffnung 212 aus dem Gehäuse 210 ableitbar ist. Das Material des Gehäuses 210 kann beispielsweise Kunststoff, Metall oder ein Verbundwerkstoff sein. Die Form des Gehäuses 210 kann den sich in ihm befindenden Komponenten beispielsweise dem Brennstoffzellenstapel 300 angepasst sein. Das Gehäuse 210 kann beispielsweise würfelförmig, aber insbesondere auch derart ausgeformt sein, dass es beispielsweise in den Antriebsstrang eines Kraftfahrzeugs integrierbar ist. Das Gehäuse 210 kann außerdem Elemente aufweisen, mit deren Hilfe es befestigbar ist. Insbesondere kann es so ermöglicht werden, dass Gehäuse 210 beziehungsweise das Brennstoffzellensystem 200 in einem Kraftfahrzeug zu befestigen. Die Öffnungen 212 können in einer einfachen Ausgestaltung Löcher sein. Ebenfalls ist es möglich, dass die Öffnungen 212 derart ausgestaltet sind, dass Leitungen an ihnen befestigbar sind. Dazu können beispielsweise Gewinde oder Klemm- beziehungsweise Klickmechanismen vorgesehen sein.

Es ist weiter ein erster Brennstoffsensor 400 gezeigt, der im Gehäuse 210 angeordnet ist. Weiterhin ist ein zweiter Brennstoffsensor 400 gezeigt, wobei der zweite Brennstoffsensor 400 außerhalb des Gehäuses 210 in der Umgebung der zweiten Öffnung 212 angeordnet ist. Ist der Brennstoff 600 gasförmig, können die Brennstoffsensoren 400 eine Komponente enthalten, die den Brennstoff 600 adsorbieren kann, wodurch die elektrische Leitfähigkeit der adsorbierenden Komponente verändert wird, was wiederum elektrosensorisch detektierbar ist. Die Anlagerung von Brennstoff 600 in den Brennstoffsensoren 400 kann auch durch gemessene Änderungen der optischen Eigenschaften detektiert werden. Ist der Brennstoff 600 Wasserstoff, können die Brennstoffsensoren 400 beispielsweise Wasserstoffmikrosensoren sein.

Außerdem ist ein Luftfilter 220 gezeigt, der an der Außenseite des Gehäuses 210 und die zweite Öffnung 212 bedeckend angeordnet ist. Der Luftfilter 220 kann ein Faserschichtfilter, ein Schüttschichtfilter und ein Filter mit festem Medium sein. Wird das Brennstoffzellensystem 200 in einem Kraftfahrzeug eingesetzt, bietet sich insbesondere die Verwendung von Papier- oder Baumwollfiltern an.

Außerdem ist eine Steuereinheit 230 zum Steuern eines Brennstoffzellensystems 200 gezeigt, wobei die Steuereinheit 230 signaltechnisch derart mit dem Brennstoffzellensystem 200 verbindbar ist, dass mit ihr das Belüftungssystem 240 gesteuert werden kann und wobei die Steuereinheit 230 Programmmodule aufweist, in denen hinterlegt ist, wie Luft 500 mittels des Belüftungssystems 240 in das Gehäuse 210 einleitbar und aus dem Gehäuse 210 ableitbar ist. Die Steuereinheit 230 kann im einfachsten Fall ein Mikrocontroller sein, also einen einzigen integrierten Schaltkreis aufweisen oder ein Controller mit mehreren integrierten Schaltkreisen, um komplexe Steueraufgaben darstellen zu können. Die Steuereinheit 230 ist vorzugsweise elektrisch mit dem Belüftungssystem 240 verbunden.

Das Belüftungssystem 240 ist mit einer Öffnung 212 und dem Brennstoffzellenstapel 300 verbunden. Diese Verbindungen können bevorzugt über luftdichte Leitungen oder ähnliche Leitungen erfolgen, beispielsweise über Kunststoffschläuche, aber auch über Metall- oder Verbundwerkstoffrohre.

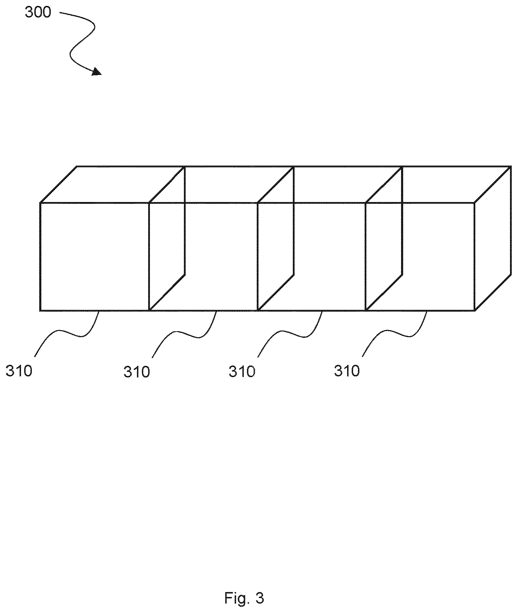

Figur 3 zeigt eine Ausgestaltung eines Brennstoffzellensystems 200, wobei das Brennstoffzellensystem 200 ferner eine weitere in dem Gehäuse 210 angeordnete Brennstoffzelle 310 aufweist und die Brennstoffzellen 310 als Brennstoffzellenstapel 300 angeordnet sind. Dargestellt sind vier Brennstoffzellen 310, die in Reihe angeordnet sind. Es können aber auch zwei, drei oder auch mehr als vier Brennstoffzellen 310 im Brennstoffzellenstapel 300 angeordnet sein.

Gleichwohl zumindest ein Ausführungsbeispiel in der vorangegangenen Beschreibung sowie der Figurenbeschreibung dargestellt wurde, sollte man anerkennen, dass eine hohe Anzahl an Variationen existiert. Weiterhin sollte man anerkennen, dass das Ausführungsbeispiel bzw. die Ausführungsbeispiele nur Beispiele sind und dass sie nicht dazu dienen, den Schutzbereich, die Anwendbarkeit oder die genaue Ausgestaltung in irgendeiner Art und Weise zu beschränken. Vielmehr stellen die Beschreibung sowie die Figurenbeschreibung für den Fachmann eine nützliche Anleitung zur Implementierung mindestens einer Ausführungsform bereit. Dabei sollte klar sein, dass verschiedene Änderungen in der Form und Funktion der beschriebenen Merkmale vorgenommen werden können, ohne den Schutzbereich der Ansprüche zu verlassen.

### Bezugszeichenliste

- 100: Verfahren zum Betrieb eines Brennstoffzellensystems
- 110: Chemische Energie
- 120: Elektrische Energie
- 200: Brennstoffzellensystem
- 210: Gehäuse
- 212: Öffnung
- 220: Luftfilter
- 230: Steuereinheit
- 240: Belüftungssystem
- 300: Brennstoffzellenstapel
- 310: Brennstoffzelle
- 400: Brennstoffsensor
- 500: Luft
- 510: Erster Luftteilstrom
- 520: Zweiter Luftteilstrom
- 530: Sauerstoff
- 600: Brennstoff

## Patentansprüche

1. Verfahren zum Betrieb eines Brennstoffzellensystems (100) mit einem zwei Öffnungen (212) aufweisenden Gehäuse (210), und einer in dem Gehäuse (210) angeordneten Brennstoffzelle (310) aufweisend die folgenden Teilschritte:
i. Bereitstellen von Luft (500), sowie Teilen der Luft (500) in einen ersten Luftteilstrom (510) und einen zweiten Luftteilstrom (520); und
ii. Leiten des zweiten Luftteilstroms (520) über eine erste Öffnung (212) in das Gehäuse (210), Leiten des zweiten Luftteilstroms (520) entlang der Brennstoffzelle (310), und Ableiten des zweiten Luftteilstroms (520) über die zweite Öffnung (212) aus dem Gehäuse (210),
**dadurch gekennzeichnet, dass** ein zweiter Brennstoffsensor (400) bereitgestellt wird und mittels des zweiten Brennstoffsensors (400) der Gehalt an Brennstoff (600) in der außerhalb des Gehäuses (210) in der Umgebung der zweiten Öffnung (212) vorhandenen Luft (500) gemessen wird.

2. Verfahren nach Anspruch 1, dass ferner die folgenden Teilschritte iii und iv aufweist:
iii. Bereitstellen von Brennstoff (600); und
iv. Leiten des ersten Luftteilstroms (510) und des Brennstoffes (600) in die Brennstoffzelle (310), Umwandlung von bei der in der Brennstoffzelle (310) stattfindenden chemischen Reaktion von Brennstoff (600) und in dem ersten Luftteilstrom (510) enthaltenem Sauerstoff (530) freigesetzter chemischer Energie (110) zu elektrischer Energie (120).

3. Verfahren nach einem der vorhergehenden Ansprüche, wobei die Teilschritte ii und iv gleichzeitig durchgeführt werden.

4. Verfahren nach einem der vorhergehenden Ansprüche, wobei ferner ein Luftfilter (220) bereitgestellt wird und während des Teilschrittes ii mittels des Luftfilters (220) der aus dem Gehäuse (210) abgeleitete zweite Luftteilstrom (520) gefiltert wird.

5. Verfahren nach einem der vorhergehenden Ansprüche, wobei ferner ein Brennstoffsensor (400) bereitgestellt wird und mittels des Brennstoffsensors (400) der Gehalt an Brennstoff (600) in dem im Gehäuse (210) vorhandenen zweiten Luftteilstrom (520) gemessen wird.

6. Brennstoffzellensystem (200) aufweisend die folgenden Komponenten:
i. ein Gehäuse (210) aufweisend zwei Öffnungen (212);
ii. eine in dem Gehäuse (210) angeordnete Brennstoffzelle (310); und
iii. ein Belüftungssystem (240), mit dem Luft (500) leitbar ist,
wobei
Luft (500) über die erste Öffnung (212) in das Gehäuse (210) einleitbar ist; und
im Gehäuse (210) vorhandene Luft (500) über die zweite Öffnung (212) aus dem Gehäuse (210) ableitbar ist,
**dadurch gekennzeichnet, dass** das Brennstoffzellensystem (200) ferner einen zweiten Brennstoffsensor (400) aufweist und der zweite Brennstoffsensor (400) außerhalb des Gehäuses (210) in der Umgebung der zweiten Öffnung (212) angeordnet ist.

7. Brennstoffzellensystem (200) nach Anspruch 6, wobei das Brennstoffzellensystem (200) ferner zumindest einen Brennstoffsensor (400) aufweist und der zumindest eine Brennstoffsensor (400) im Gehäuse (210) angeordnet ist.

8. Brennstoffzellensystem (200) nach einem der Ansprüche 6 oder 7, wobei das Brennstoffzellensystem (200) ferner einen Luftfilter (220) aufweist und der Luftfilter (220) an der Außenseite des Gehäuses (210) und die zweite Öffnung (212) bedeckend angeordnet ist.

9. Brennstoffzellensystem (200) nach einem der Ansprüche 6 bis 8, wobei das Brennstoffzellensystem (200) ferner eine weitere in dem Gehäuse (210) angeordnete Brennstoffzelle (310) aufweist und die Brennstoffzellen (310) als Brennstoffzellenstapel (300) angeordnet sind.

10. Steuereinheit (230) zum Steuern eines Brennstoffzellensystems (200) nach einem der Ansprüche 6 bis 9, wobei die Steuereinheit (230) signaltechnisch derart mit dem Brennstoffzellensystem (200) verbindbar ist, dass mit der Steuereinheit (230) das Belüftungssystem (240) gesteuert werden kann, und wobei die Steuereinheit (230) Programmmodule aufweist, in denen hinterlegt ist, wie Luft (500) mittels des Belüftungssystems (240) in das Gehäuse (210) einleitbar und aus dem Gehäuse (210) ableitbar ist.

11. Computerprogrammprodukt mit Programmcode-Mitteln, die auf einem computerlesbaren Datenträger gespeichert sind, um das Verfahren nach einem der Ansprüche 1 bis 5 durchzuführen, wenn das Computerprogrammprodukt auf einem Computer, insbesondere einer Steuereinheit (230) nach Anspruch 10 ausgeführt wird.

12. Computerprogramm mit kodierten Anweisungen zur Durchführung des Verfahrens nach einem der Ansprüche 1-5, wenn das Computerprogramm auf einem Computer, insbesondere einem Computer in einer Steuereinheit (230) nach Anspruch 10 ausgeführt wird.

13. Signalfolge mit computerlesbaren Anweisungen zur Durchführung des Verfahrens nach einem der Ansprüche 1-5, wenn die Signalfolge von einem Computer, insbesondere einer Steuereinheit (230) nach Anspruch 10 verarbeitet wird.

## Claims

1. Method for operating a fuel cell system (100) comprising a housing (210) having two openings (212), and a fuel cell (310) arranged in the housing (210), comprising the following sub-steps:
i. Providing air (500), and dividing the air (500) into a first partial air stream (510) and a second partial air stream (520); and
ii. Guiding the second partial air stream (520) through a first opening (212) into the housing (210), guiding the second partial air stream (520) along the fuel cell (310), and discharging the second partial air stream (520) through the second opening (212) from the housing (210).
**Characterized in that** a second fuel sensor (400) is provided, and the content of fuel (600) in the air (500) present outside the housing (210) in the vicinity of the second opening (212) is measured by means of the second fuel sensor (400).

2. Method according to claim 1, further comprising the following sub-steps iii and iv:
iii. Providing fuel (600); and
iv. Guiding the first partial air stream (510) and the fuel (600) into the fuel cell (310), converting chemical energy (110) released during the chemical reaction occurring in the fuel cell (310) between fuel (600) and oxygen (530) contained in the first partial air stream (510) into electrical energy (120).

3. Method according to one of the preceding claims, wherein sub-steps ii and iv are carried out simultaneously.

4. Method according to one of the preceding claims, wherein an air filter (220) is further provided and during sub-step ii the second partial air stream (520) discharged from the housing (210) is filtered by means of the air filter (220).

5. Method according to one of the preceding claims, wherein a fuel sensor (400) is further provided and by means of the fuel sensor (400) the content of fuel (600) in the second partial air stream (520) present in the housing (210) is measured.

6. Fuel cell system (200) comprising the following components:
i. a housing (210) having two openings (212);
ii. a fuel cell (310) arranged in the housing (210); and
iii. a ventilation system (240) through which air (500) can be conducted,
wherein
air (500) can be introduced into the housing (210) through the first opening (212); and
air (500) present in the housing (210) can be discharged from the housing (210) through the second opening (212),
**characterized in that** the fuel cell system (200) further comprises a second fuel sensor (400) and the second fuel sensor (400) is arranged outside the housing (210) in the vicinity of the second opening (212).

7. Fuel cell system (200) according to claim 6, wherein the fuel cell system (200) further comprises at least one fuel sensor (400) and the at least one fuel sensor (400) is arranged in the housing (210).

8. Fuel cell system (200) according to one of claims 6 and 7, wherein the fuel cell system (200) further comprises an air filter (220) and the air filter (220) is arranged on the outside of the housing (210) covering the second opening (212).

9. Fuel cell system (200) according to one of claims 6 to 8, wherein the fuel cell system (200) further comprises an additional fuel cell (310) arranged in the housing (210) and the fuel cells (310) are arranged as a fuel cell stack (300).

10. Control unit (230) for controlling a fuel cell system (200) according to one of claims 6 to 9, wherein the control unit (230) can be connected to the fuel cell system (200) in terms of signal technology such that the ventilation system (240) can be controlled by means of the control unit (230), and wherein the control unit (230) comprises program modules in which it is stored how air (500) can be introduced into the housing (210) and discharged from the housing (210) by means of the ventilation system (240).

11. Computer program product with program code means stored on a computer-readable data carrier for carrying out the method according to one of claims 1 to 5 when the computer program product is executed on a computer, in particular on a control unit (230) according to claim 10.

12. Computer program with coded instructions for carrying out the method according to one of claims 1-5 when the computer program is executed on a computer, in particular on a computer in a control unit (230) according to claim 10.

13. Signal sequence with computer-readable instructions for carrying out the method according to one of claims 1-5 when the signal sequence is processed by a computer, in particular by a control unit (230) according to claim 10.

## Revendications

1. Procédé de fonctionnement d'un système de pile à combustible (100) comprenant un boîtier (210) présentant deux ouvertures (212), et une pile à combustible (310) disposée dans le boîtier (210), comprenant les sous-étapes suivantes :
i. fournir de l'air (500), et diviser l'air (500) en un premier flux d'air partiel (510) et un second flux d'air partiel (520) ; et
ii. diriger le second flux d'air partiel (520) à travers une première ouverture (212) dans le boîtier (210), diriger le second flux d'air partiel (520) le long de la pile à combustible (310), et évacuer le second flux d'air partiel (520) à travers la seconde ouverture (212) hors du boîtier (210).
**Caractérisé en ce qu'**un deuxième capteur de carburant (400) est prévu, et que la teneur en carburant (600) dans l'air (500) présent à l'extérieur du boîtier (210), au voisinage de la deuxième ouverture (212), est mesurée au moyen du deuxième capteur de carburant (400).

2. Procédé selon la revendication 1, comprenant en outre les sous-étapes iii et iv suivantes :
iii. fournir un combustible (600) ; et
iv. diriger le premier flux d'air partiel (510) et le combustible (600) dans la pile à combustible (310), convertir l'énergie chimique (110) libérée lors de la réaction chimique se produisant dans la pile à combustible (310) entre le combustible (600) et l'oxygène (530) contenu dans le premier flux d'air partiel (510) en énergie électrique (120).

3. Procédé selon l'une quelconque des revendications précédentes, dans lequel les sous-étapes ii et iv sont réalisées simultanément.

4. Procédé selon l'une quelconque des revendications précédentes, dans lequel un filtre à air (220) est en outre prévu et, pendant la sous-étape ii, le second flux d'air partiel (520) évacué du boîtier (210) est filtré au moyen du filtre à air (220).

5. Procédé selon l'une quelconque des revendications précédentes, dans lequel un capteur de combustible (400) est en outre prévu et, au moyen du capteur de combustible (400), la teneur en combustible (600) dans le second flux d'air partiel (520) présent dans le boîtier (210) est mesurée.

6. Système de pile à combustible (200) comprenant les composants suivants:
i. un boîtier (210) présentant deux ouvertures (212) ;
ii. une pile à combustible (310) disposée dans le boîtier (210); et
iii. un système de ventilation (240) au moyen duquel de l'air (500) peut être conduit,
dans lequel
de l'air (500) peut être introduit dans le boîtier (210) à travers la première ouverture (212) ; et
l'air (500) présent dans le boîtier (210) peut être évacué du boîtier (210) à travers la seconde ouverture (212),
**caractérisé en ce que** le système de pile à combustible (200) comprend en outre un second capteur de combustible (400) et que le second capteur de combustible (400) est disposé à l'extérieur du boîtier (210) à proximité de la seconde ouverture (212).

7. Système de pile à combustible (200) selon la revendication 6, dans lequel le système de pile à combustible (200) comprend en outre au moins un capteur de combustible (400) et ledit au moins un capteur de combustible (400) est disposé dans le boîtier (210).

8. Système de pile à combustible (200) selon l'une quelconque des revendications 6 et 7, dans lequel le système de pile à combustible (200) comprend en outre un filtre à air (220) et le filtre à air (220) est disposé sur la face extérieure du boîtier (210) en recouvrant la seconde ouverture (212).

9. Système de pile à combustible (200) selon l'une quelconque des revendications 6 à 8, dans lequel le système de pile à combustible (200) comprend en outre une autre pile à combustible (310) disposée dans le boîtier (210) et les piles à combustible (310) sont disposées sous forme d'un empilement de piles à combustible (300).

10. Unité de commande (230) destinée à commander un système de pile à combustible (200) selon l'une quelconque des revendications 6 à 9, l'unité de commande (230) pouvant être reliée au système de pile à combustible (200) du point de vue des signaux de sorte que le système de ventilation (240) puisse être commandé au moyen de l'unité de commande (230), et l'unité de commande (230) comprenant des modules de programme dans lesquels est mémorisée la manière dont l'air (500) peut être introduit dans le boîtier (210) et évacué du boîtier (210) au moyen du système de ventilation (240).

11. Produit de programme d'ordinateur comprenant des moyens de code de programme stockés sur un support de données lisible par ordinateur pour exécuter le procédé selon l'une quelconque des revendications 1 à 5 lorsque le produit de programme d'ordinateur est exécuté sur un ordinateur, en particulier sur une unité de commande (230) selon la revendication 10.

12. Programme d'ordinateur comportant des instructions codées pour exécuter le procédé selon l'une quelconque des revendications 1 à 5 lorsque le programme d'ordinateur est exécuté sur un ordinateur, en particulier sur un ordinateur dans une unité de commande (230) selon la revendication 10.

13. Séquence de signaux comportant des instructions lisibles par ordinateur pour exécuter le procédé selon l'une quelconque des revendications 1 à 5 lorsque la séquence de signaux est traitée par un ordinateur, en particulier par une unité de commande (230) selon la revendication 10.
